# EUROPEAN PATENT APPLICATION

(11) **EP 1 729 451 A1**
(43) Date of publication of application: **06.12.2006**
(21) Application number: 06114842.5
(22) Date of filing: 01.06.2006
(51) Int. Cl.: H04L 12/28, H04L 12/56

(54) **Electronic apparatus and access management program**

(30) Priority: 01.06.2005 JP 2005161680
(71) Applicant: KABUSHIKI KAISHA TOSHIBA, Tokyo 105-8001 (JP)
(72) Inventor: Watanabe, Hiroyuki c/oToshiba Corporation IPD, Tokyo (JP)
(74) Representative: Henkel, Feiler & Hänzel

(57) **Abstract**

According to one embodiment, an electronic apparatus includes: a communication unit that communicates with a plurality of apparatuses connected to a computer network; a storage unit that stores access management information indicating permission/prohibition of access from one of the apparatuses to another of the apparatuses with respect to each of the apparatuses; and a control unit that detects through the communication unit a new apparatus that is newly connected to the computer network. The control unit permits the new apparatus to access to the apparatuses while adding information concerning the new apparatus to the access management information when the new apparatus satisfies a predetermined condition.

## Description

### CROSS-REFERENCE TO RELATED APPLICATIONS

This application is based upon and claims the benefit of priority from Japanese Patent Application No. 2005-161680 filed on June 1, 2006, the entire contents of which are incorporated herein by reference.

### BACKGROUND

### 1. Field

One embodiment of the invention relates to an electronic apparatus provided with a communication unit that communicates with individual apparatuses connected to a network. Particularly it relates to an electronic apparatus and an access management program capable of managing access of apparatuses on a network.

### 2. Description of the Related Art

For example, a server such as a home server may be connected to a plurality of electrical products for home use to construct a home network. Generally, in such a network, the server integrally manages these individual apparatuses connected on the network.

For example, US Patent Application Publication No. 2004/0255038 discloses a technique using an apparatus management table in a server for integrally managing electrical products installed in rooms in a house.

For connecting individual apparatuses to a network newly, a job of registering the individual apparatuses one by one by using a remote controller accompanying each apparatus to enable the each apparatus to make access to a server or the like is required particularly at the time of connection of an AV apparatus such as a TV set, a DVD recorder, etc. because the AV apparatus is not provided with any input unit such as a keyboard. In addition, when setting is intended to be performed to disable access from one apparatus to another apparatus, a job for the setting is laborious likewise.

These jobs for registration, setting, etc. are troublesome, complicate and laborious to a user, so that there is a possibility that the user may make an operation by mistake.

### BRIEF DESCRIPTION OF THE SEVERAL VIEWS OF THE DRAWINGS

A general architecture that implements the various feature of the invention will now be described with reference to the drawings. The drawings and the associated descriptions are provided to illustrate embodiments of the invention and not to limit the scope of the invention.

Fig. 1 is an exemplary view showing a configuration of a system according to an embodiment of the invention;

Fig. 2 is an exemplary view showing a configuration of an apparatus A shown in Fig. 1.

Fig. 3 is an exemplary diagram showing the system configuration of a computer shown in Fig. 2;

Fig. 4 is an exemplary block diagram showing a functional configuration of a management program shown in Fig. 3;

Fig. 5 is an exemplary view showing an access management list stored in a storage unit shown in Fig. 4;

Fig. 6 is an exemplary view showing an edition screen for editing the contents of the access management list shown in Fig. 5;

Fig. 7 is an exemplary view showing a setting screen for performing setting concerning access management according to the embodiment;

Fig. 8 is an exemplary flow chart showing (a first part of) a server side (host side) operation based on a management program according to the embodiment;

Fig. 9 is an exemplary flow chart showing (a second part of) the server side (host side) operation based on the management program; and

Fig. 10 is an exemplary flow chart showing a client side (not-host side) operation based on a control program.

### DETAILED DESCRIPTION

Various embodiments according to the invention will be described hereinafter with reference to the accompanying drawings.

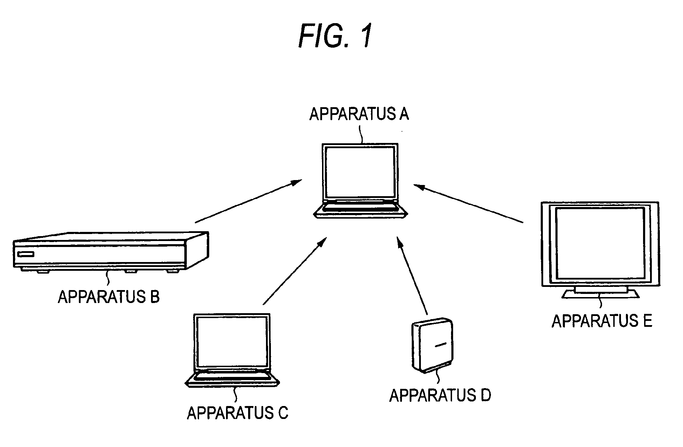

Fig. 1 is an exemplary view showing the configuration of a system according to an embodiment of the invention.

This system is constituted by a plurality of electronic apparatuses (devices) inclusive of one management server (or host). The apparatuses are provided with communication units respectively so that the communication units can communicate with one another through a network such as a wire or wireless LAN. For example, it may be assumed that a personal computer (PC) is an apparatus A, a recording/reproducing apparatus is an apparatus B, a PC is an apparatus C, an HDD is an apparatus D and a digital TV is an apparatus E.

The apparatus A is provided with a display device and an input unit so that the apparatus A can operate as a server, for example, on a home network. The apparatus A which operates as a server is provided with a storage medium in which access management information indicating permission/prohibition of access from one apparatus to another apparatus on the network has been stored with respect to each apparatus. The apparatus A integrally manages processes concerning accesses of the apparatuses A, B, C, D and E on the basis of this information.

For example, the apparatus A as a server detects a new apparatus connected to the network newly through the communication unit and permits the new apparatus to access to apparatuses on the network while adding information concerning the new apparatus to the access management information (access management list) when the detected new apparatus satisfies a predetermined condition. Such an operation is implemented by an access management program (hereinafter referred to as "management program") executed by a processor provided in the server.

On the other hand, for participation of each of the apparatuses B, C, D and E operating as a client (or non-host) to participate in the network newly, the apparatus starts a process of searching for the server through the communication unit. If the apparatus satisfies the predetermined condition, the apparatus can receive permission to participate in the network from the server and further can acquire from the server all or part of the access management information (e.g. MAC addresses of the apparatuses to which the client is permitted to access) as information necessary for access. The client can gain access desirably by using the acquired MAC addresses. Such an operation is implemented by a control program executed by a processor provided in the client.

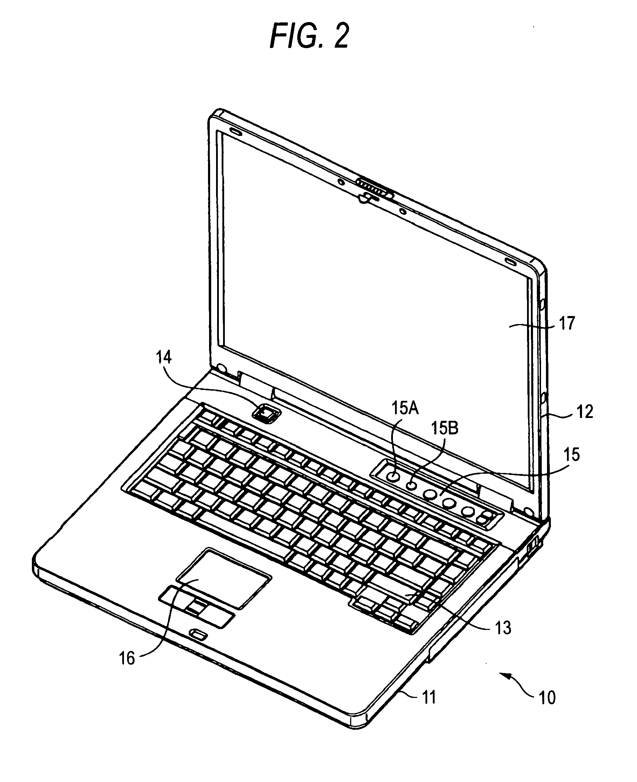

Fig. 2 is an exemplary view showing an example of configuration of the apparatus A shown in Fig. 1.

A personal computer 10 shown in Fig. 2 is equivalent to the apparatus A shown in Fig. 1.

The computer 10 includes a computer body 11, and a display unit 12. A display device including an LCD (Liquid Crystal Display) 17 is incorporated in the display unit 12. A display screen of the LCD 17 is located approximately in the center of the display unit 12.

The display unit 12 is attached to the computer body 11 so that the display unit 12 can rotate between an open position and a close position. The computer body 11 has a thin box-like housing. A keyboard 13, a power button 14 for powering on/off the computer 10, an input operation panel 15, a touch pad 16, etc. are disposed in an upper surface of the computer body 11.

The input operation panel 15 is an input unit for inputting an event corresponding to a pushed button. The input operation panel 15 has a group of buttons for starting a plurality of functions respectively. The button group includes a TV start button 15A, and a DVD (Digital Versatile Disc) start button 15B. The TV start button 15A is a button for starting a TV function for reproducing/recording data of broadcast programs such as digital TV broadcast programs. When the TV start button 15A is pushed down by a user, an application program for executing the TV function is started automatically. The DVD start button 15B is a button for reproducing video contents recorded in a DVD. When the DVD start button 15B is pushed down by the user, an application program for reproducing video contents is started automatically.

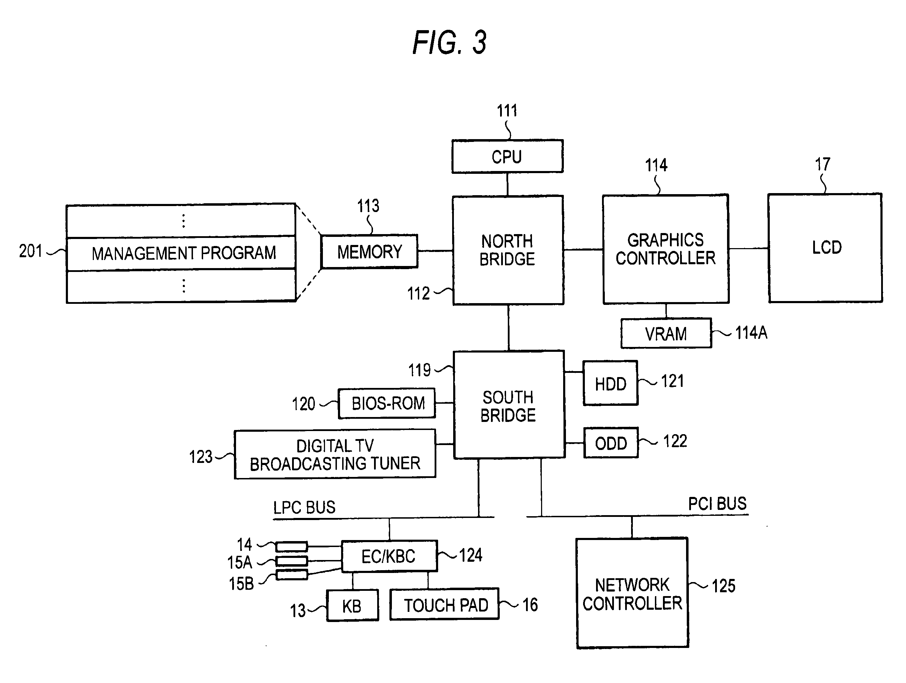

Fig. 3 is an exemplary diagram showing the system configuration of the computer shown in Fig. 2.

As shown in Fig. 3, the computer 10 includes a CPU 111, a north bridge 112, a main memory 113, a graphics controller 114, a south bridge 119, a BIOS-ROM 120, a hard disk drive (HDD) 121, an optical disk drive (ODD) 122, a digital TV broadcasting tuner 123, an embedded controller/keyboard controller IC (EC/KBC) 124, a network controller 125, etc.

The CPU 111 is a processor provided for controlling the operation of the computer 10. The CPU 111 executes various application programs such as an operating system (OS) and a management program 201, which are loaded from the hard disk drive (HDD) 121 to the main memory 113.

The CPU 111 also executes a system BIOS (Basic Input Output System) stored in the BIOS-ROM 120. The system BIOS is a program for controlling hardware.

The north bridge 112 is a bridge device for connecting a local bus of the CPU 111 and the south bridge 119 to each other. The north bridge 112 also has a built-in memory controller for access control of the main memory 113. In addition, the north bridge 112 has a function of executing communication with the graphics controller 114 through an AGP (Accelerated Graphics Port) bus or the like.

The graphics controller 114 is a display controller for controlling the LCD 17 used as a display monitor of the computer 10. The graphics controller 114 generates a display signal to be sent to the LCD 17 from image data written in a video memory (VRAM) 114A.

The south bridge 119 controls respective devices on an LPC (Low Pin Count) bus and respective devices on a PCI (Peripheral Component Interconnect) bus. In addition, the south bridge 119 has a built-in IDE (Integrated Drive Electronics) controller for controlling the HDD 121 and the ODD 122. The south bridge 119 also has a function of controlling the digital TV broadcasting tuner 123, and a function for access control of the BIOS-ROM 120.

The HDD 121 is a storage device for storing various kinds of software and data. The optical disk drive (ODD) 123 is a drive unit for driving a storage medium such as a DVD where video contents are stored. The digital TV broadcasting tuner 123 is a receiver for receiving data of broadcast programs such as digital TV broadcast programs from the outside.

The embedded controller/keyboard controller IC (EC/KBC) 124 is a one-chip microcomputer in which an embedded controller for power management and a keyboard controller for controlling the keyboard (KB) 13 and the touch pad 16 are integrated. The embedded controller/keyboard controller 1C (EC/KBC) 124 has a function of powering on/off the computer 10 in accordance with the user' s operation of the power button 14 . Further, the embedded controller/keyboard controller IC (EC/KBC) 124 can also power on/off the computer 10 in accordance with the user's operation of the TV start button 15A or the DVD start button 15B. The network controller 125 is a communication unit for performing communication with the apparatuses B, C, D, E, etc. through the network such as an LAN.

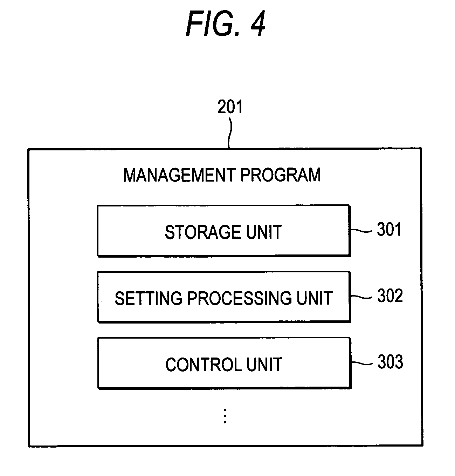

Fig. 4 is an exemplary block diagram showing the functional configuration of the management program 201 shown in Fig. 3.

The management program 201 includes various functions such as a storage unit 301, a setting processing unit 302 and a control unit 303.

The storage unit 301 stores various pieces of setting information including the access management list, etc. indicating permission/prohibition of access from one apparatus to another apparatus on the network with respect to each apparatus.

The setting processing unit 302 sets permission/prohibition of access from a new apparatus newly connected to the network to another apparatus on the network, or sets permission/prohibition of access from one apparatus to another apparatus on the network, in accordance with a predetermined operation made by the user using the input unit such as the keyboard 13. The set contents are reflected on the storage unit 301, etc.

The control unit 303 detects a new apparatus newly connected to the network through the communication unit such as the network controller 125 and permits the new apparatus to access to apparatuses on the network while adding information concerning the new apparatus to the access management list stored in the storage unit 301 when the detected new apparatus satisfies a predetermined condition (e.g. when preset setting information indicates that participation of the new apparatus in the network is always permitted). In addition, the control unit 303 has a function of notifying individual apparatuses on the network of changed information to keep information consistency whenever the access management list is changed, and a function of sending a piece of the access management list concerning a requesting apparatus (e.g. only information concerning MAC addresses of apparatuses to which the requesting apparatus is permitted to access) to the requesting apparatus when there is a predetermined request from the apparatus on the network.

The management program 201 having such functions can be applied not only to the apparatus A but also to another apparatus (e.g. apparatus C) which has a display device and an input unit necessary for the user's setting process, and a processor necessary for execution of the program. For example, the apparatus provided with the management program 201 can operate as a server when the apparatus takes over the right of a server from the apparatus A.

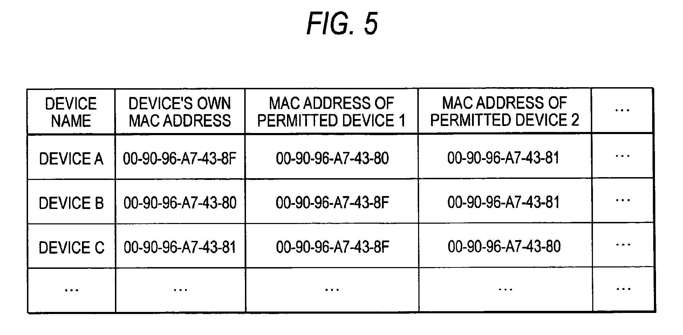

Fig. 5 is an exemplary view showing the access management list stored in the storage unit 301 shown in Fig. 4. Incidentally, devices A, B, C, ... shown in Fig. 5 are equivalent to the apparatuses A, B, C, ... shown in Fig. 1.

In the example shown in Fig. 5, information about the device A as a server is written in the first line of the access management list, information about the device B is written in the second line of the access management list, and information about the device C is written in the third line of the access management list. Incidentally, the access management list may be made so that pieces of information such as latest access date and time, the frequency of accesses, etc., as well as these pieces of information are written sequentially.

On the line of each device, an MAC address of the device per se, an MAC address of a permitted device 1 (first device permitted to gain access to the device), an MAC address of a permitted device 2 (second device permitted to gain access to the device), etc. are written.

For example, control is made so that respective devices having the MAC addresses [00-90-96-A7-43-80], [00-90-96-A7-43-81], ... shown on the line of the device A are permitted to gain access to the device A while other devices than these devices are prohibited from gaining access to the device A.

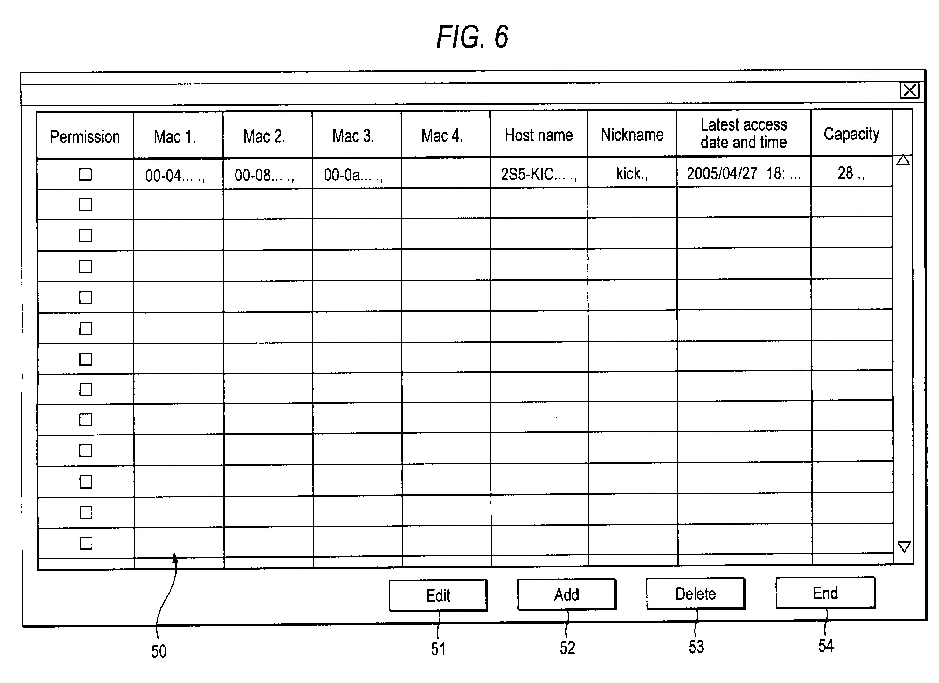

Fig. 6 is an exemplary view showing an edition screen for editing the contents of the access management list shown in Fig. 5. For example, this edition screen is displayed on the LCD 17.

As shown in Fig. 6, the setting processing unit 302 can display a device list 50 in a format easy for the user to understand the contents of the access management list. When the user pushes down an edit button 51 on the device list 50, edition is enabled. In this state, when the user designates a field to be changed and pushes down an add button 52, a delete button 53, etc. in accordance with necessity, the user can perform desired edition. In addition, when the user performs an operation of clicking a mouse on, permission/prohibition of access to the corresponding device can be switched easily. To decide the edited contents, the user can push down an end button 54.

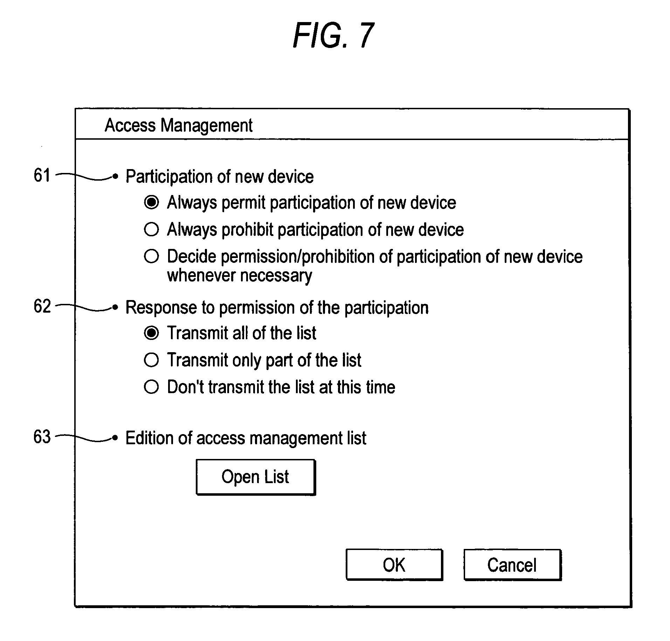

Fig. 7 is an exemplary view showing a setting screen for performing setting concerning access management. For example, this setting screen is displayed on the LCD 17.

As shown in Fig. 7, the setting processing unit 302 can display a setting screen including setting items for editing the access management list. The setting screen includes a setting item 61 "participation of new device", a setting item 62 "response to permission of the participation", and a setting item 63 "edition of access management list".

In the setting item 61, a selection entry (i) "always permit participation of new device", a selection entry (ii) "always prohibit participation of new device" and a selection entry (iii) "decide permission/prohibition of participation of new device whenever necessary" are provided so that one of the entries can be selected as a response to the new device's request to participate in the network.

In the setting item 62, a selection entry (i) "transmit all of the list", a selection entry (ii) "transmit only part of the list" and a selection entry (iii) "don't transmit the list at this time" are provided so that one of the entries can be selected as a response to permission of the new device to participate in the network.

In the setting item 63, a button "open the list" for editing the access management list is provided. When the button is pushed down, the edition screen of the access management list (e.g. the screen corresponding to that shown in Fig. 6) can be displayed.

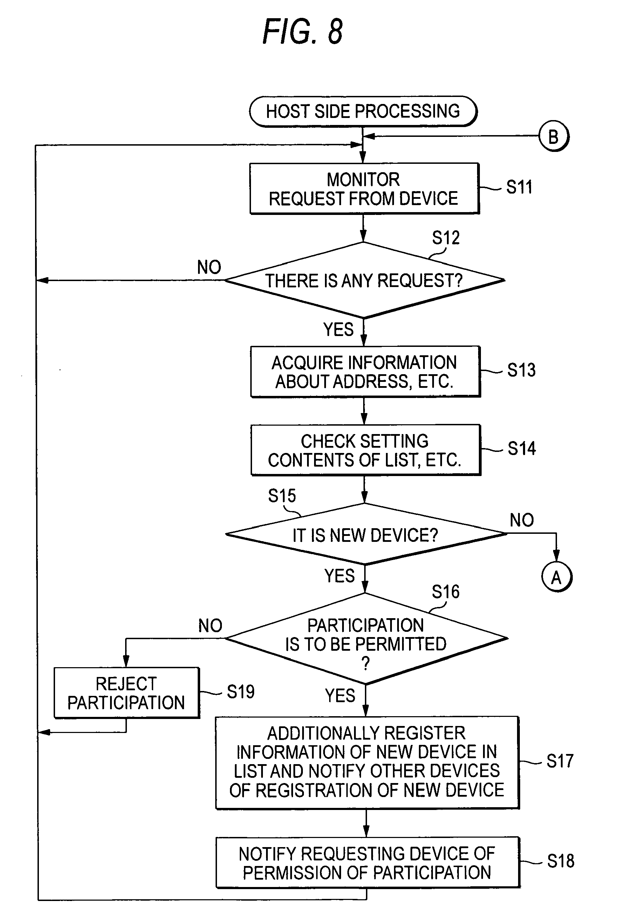

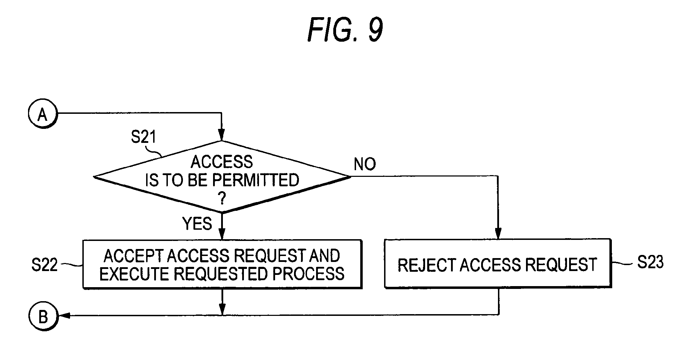

Next, a server side (host side) operation based on the management program will be described with reference to exemplary flow charts of Figs. 8 and 9.

As shown in Fig. 8, the server apparatus (e.g. the apparatus A) monitors whether or not there is a request from another device (e.g. any one of the apparatuses B, C, D and E) to connect the device to the network or gain access to the network through the communication unit (Block S11). When there is a request (Yes in Block S11), the server apparatus acquires information about the MAC address, etc. from the requesting device (Block S13) and confirms setting information including the access management list (Block S14) to thereby judge whether or not the requesting device is a new device which has been not registered in the device management list yet (Block S15).

When the device is a new device (Yes in Block S15), the server apparatus refers to the setting information including the access management list to thereby judge whether participation of the device in the network is to be permitted or not (Block S16). When the participation is to be permitted (Yes in Block S16), the server apparatus additionally registers the MAC address, etc. of the device to the access management list and notifies the other devices of the registration of the new device (e.g. the server apparatus transmits a corresponding piece of the access management information to the other devices) (Block S17). In this manner, consistency among the pieces of information possessed by the respective devices connected to the network can be maintained. The server apparatus notifies the requesting device of permission of the device to participate in the network (Block S18). Then, the processes from Block S11 are repeated.

Incidentally, when it is determined in Block S18 that the device requesting participation is permitted to participate in the network, part or all of the access management list (e.g. only information about the MAC addresses of devices to which the requesting device is permitted to access) may be transmitted to the requesting device. Or, the list may be transmitted whenever a request for the list is made separately.

When it is determined in Block S16 that participation is not permitted (No in Block S16), the server apparatus rejects participation of the device in the network (Block S19), and then repeats the processes from Block S11.

On the other hand, when it is determined in Block S15 that the requesting device is not an unregistered new device but a device registered in the access management list (No in Block S15), the server apparatus refers to the setting information including the access management list to thereby judge whether access of the device is to be permitted or not, as shown in Fig. 9 (Block S21) When the access is permitted (Yes in Block S21), the server apparatus accepts the access request and executes the requested process (Block S22). Then, the server apparatus repeats the processes from Block S11.

When it is determined in Block 21 that the access is not permitted (No in Block S21), the server apparatus rejects the access request (Block S23), and then repeats the processes from Block S11.

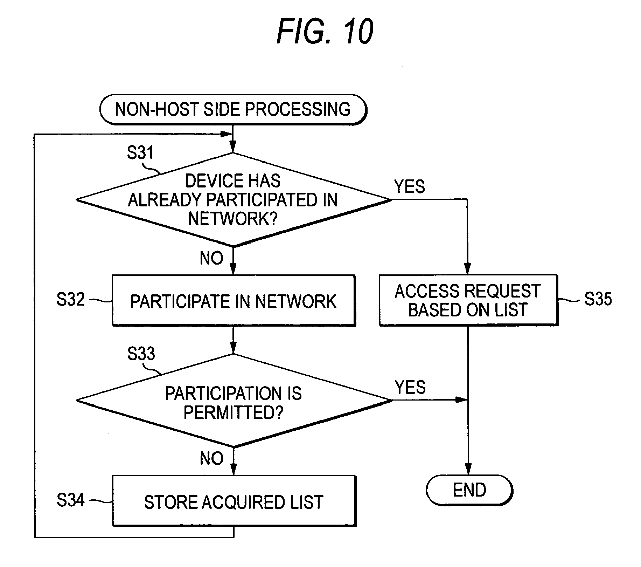

Next, a client side (non-host side) operation based on the control program will be described with reference to an exemplary flow chart of Fig. 10.

As shown in Fig. 10, when the client apparatus (e. g. the apparatus B) has not participated in the network yet (No in Block S31), the client apparatus searches for the server through the communication unit and makes a request to the server for participation in the network (Block S32). When the client apparatus receives a response indicating permission of participation in the network from the server (Yes in Block S33), the client apparatus stores information of the list, etc. acquired from the server in a predetermined storage area (Block S34). When participation in the network is not permitted (Block S33), no more process is performed.

After participation in the network is permitted (Yes in Block S31), the client apparatus uses the MAC address shown in the list to send a desired access request to the server or any other apparatus on the network through the communication unit (Block S35).

As described above, according to the embodiment, the processes for registration, etc. concerning access management can be performed efficiently. Particularly, complications of the process for connecting a new device to the network can be reduced so that the user can save time and labor greatly. In addition, the contents of registration, the contents of setting, etc. can be changed easily. Further, since the same management program as provided in the server can be installed in another apparatus, the function of the server can be shifted to the other apparatus easily so that a system form favorable to the user can be achieved easily.

Various processing procedures according to the embodiment as described above in the embodiment may be stored as computer programs in a computer-readable storage medium (e.g. a magnetic disk, an optical disk, or a semiconductor memory) so that the processing procedures can be read and executed by the processor in accordance with necessity. Such computer programs can be distributed by transmission from one computer to another computer through a communication medium.

While certain embodiments of the inventions have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

## Claims

1. An electronic apparatus comprising:
a communication unit that communicates with a plurality of apparatuses connected to a computer network;
a storage unit that stores access management information indicating permission/prohibition of access from one of the apparatuses to another of the apparatuses with respect to each of the apparatuses; and
a control unit that detects through the communication unit a new apparatus that is newly connected to the computer network,
wherein the control unit permits the new apparatus to access to the apparatuses while adding information concerning the new apparatus to the access management information when the new apparatus satisfies a predetermined condition.

2. The electronic apparatus according to claim 1, further comprising:
a display unit that displays the access management information; and
an input unit that allows a user to edit the access management information displayed on the display unit.

3. The electronic apparatus according to claim 2, further comprising a setting processing unit that sets permission/prohibition of access from the new apparatus to each of the apparatuses on the computer network in accordance with a predetermined operation on the input unit.

4. The electronic apparatus according to claim 1, wherein when the access management information is changed, the control unit notifies the apparatuses of changed information in the access management information.

5. The electronic apparatus according to claim 1, wherein when there is a predetermined request from one of the apparatuses to another of the apparatuses, the control unit sends a piece of the access management information concerning the another of the apparatuses to the one of the apparatuses.

6. A storage medium readable by a computer, the storage medium storing a program of instructions executable by the computer to perform procedure for access management in a computer including a communication unit for communicating with a plurality of apparatuses connected to a computer network, the procedure comprising:
storing access management information in a storage unit, the access management information indicating permission/prohibition of access from one of the apparatuses to another of the apparatuses with respect to each of the apparatuses; and
detecting a new apparatus that is newly connected to the network through the communication unit; and
permitting the new apparatus to access to the apparatuses while adding information concerning the new apparatus to the access management information stored in the storage unit when the detected new apparatus satisfies a predetermined condition.

7. The storage medium according to claim 6, the procedure further comprising:
displaying the access management information on a display unit; and
editing the access management information displayed on the display unit through an input unit.

8. The storage medium according to claim 7, the procedure further comprising, setting permission/prohibition of access from the new apparatus to each of the apparatuses in accordance with a predetermined operation on the input unit.

9. The storage medium according to claim 6, the procedure further comprising, when the access management information is changed, notifying the apparatuses of changed information.

10. The storage medium according to claim 7, the procedure further comprising, when there is a predetermined request from one of the apparatuses to another of the apparatuses, sending a piece of the access management information concerned with the another of the apparatuses to the one of the apparatuses.
